(19) Europäisches Patentamt
European Patent Office
Office européen des brevets

(11) **EP 4 207 745 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
***H04N 5/265*** (2006.01)

(21) Application number: **21870805.5**

(86) International application number:
**PCT/CN2021/092267**

(22) Date of filing: **08.05.2021**

(87) International publication number:
**WO 2022/062417 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2020 CN 202011004707**

(71) Applicants:
• **Beijing Wodong Tianjun Information Technology Co.,
Ltd.
100176 Beijing (CN)**
• **Beijing Jingdong Century Trading Co., Ltd.
Beijing 100176 (CN)**

(72) Inventors:
• **ZHOU, Fangru
Beijing 100176 (CN)**
• **AN, Shan
Beijing 100176 (CN)**
• **YANG, Mei
Beijing 100176 (CN)**

(74) Representative: **Weston, Dominic James
Page White & Farrer Services
Bedford House
21A John Street
London WC1N 2BF (GB)**

(54) **METHOD FOR EMBEDDING IMAGE IN VIDEO, AND METHOD AND APPARATUS FOR ACQUIRING PLANAR PREDICTION MODEL**

(57) Provided are a method for embedding an image in video, and a method and apparatus for acquiring a planar prediction model, relating to the field of image processing. The method comprises: inputting a video frame image of a video into a planar prediction model to obtain a predicted plane mask of the video frame image, said planar prediction model being obtained by training a deep learning model using training images with labels having planar detection frames and plane masks; embedding the image to be embedded into the plane mask of the predicted video frame image. By means of automatically finding plane masks widely present in the individual video frame images, and embedding an image to be embedded into a plane mask, not only is the image integrated automatically and naturally into the video, but the image is also more widely integrated into the video.

```
┌─────────────────────────────────────────┐
│ 110, a plane detection frame and a plane │
│          mask in a training image        │
│             are labelled                 │
└─────────────────────────────────────────┘
                    │
                    ▼
┌─────────────────────────────────────────┐
│  120, a deep learning model is trained   │
│   using the training image with the      │
│  labels of the plane detection frame     │
│          and the plane mask              │
└─────────────────────────────────────────┘
                    │
                    ▼
┌─────────────────────────────────────────┐
│ 130, the trained deep learning model is  │
│  determined as the plane prediction      │
│              model                       │
└─────────────────────────────────────────┘
```

Fig. 1

EP 4 207 745 A1

**Description**

**CROSS-REFERENCE TO RELATED APPLICATIONS**

This application is based on and claims the priority of the Chinese patent application No. 202011004707.1 filed on September 22, 2020, the disclosure of which is hereby incorporated as a whole into the present application.

**TECHNICAL FIELD**

This disclosure relates to the field of image processing, and particularly, to a method of embedding an image in a video, A method and an apparatuses of acquiring a plane prediction model.

**BACKGROUND**

Advertisement in a video is one of effective propaganda means.

Inserting an advertisement video in a video is to choose a moment in the original video and insert the prepared advertisement video into the original video. When the advertisement video is inserted and played, a user cannot watch the original video at all, which affects watching experience of the user.

Posting an advertisement image in a video is to post the advertisement image in a corner region of each frame of video image and when the user watches the original video, pop up one advertisement image in the corner of a video playing interface. The user can watch the original video while the advertisement image is played, but the popped-up advertisement image may block key content of the original video, and the advertisement image and the video are fused unnaturally.

Embedding an advertisement image in a video is to embed the advertisement image into a certain position in a video frame image and fuse the advertisement image into the video. In some related art, the video is detected, and if targets such as specific objects or already existing advertisements are found therein, these targets are replaced with the advertisement image. There are also some related art in which an advertisement placement position is labelled in one video frame image, and for other video frame images, the advertisement placement position is tracked using feature point matching, and the advertisement is placed in the tracked position.

Inventors have found that in the related art of embedding the advertisement image in the video, there are many restrictions on finding the embedding position of the advertisement image, as a result, most often a suitable embedding position cannot be found in the video. For example, it is difficult to find a specific replaceable target in the video, or it is impossible to track a pre-labelled advertisement placement position in the video, such that the advertisement image is hard to be embedded into the video.

**SUMMARY**

In the embodiments of the present disclosure, by automatically finding a plane mask widely existing in each video frame image and embedding an image to be embedded into the plane mask, the image is not only made automatically and naturally fused into a video, but also made more widely fused into the video. In addition, key points in the plane mask in each video frame image can also be automatically found, and the image to be embedded is embedded into a position region corresponding to the key points, thereby improving the fusion effect of the image and the video.

According to some embodiments of the present disclosure, there is provided a method of embedding an image in a video, comprising:

inputting a video frame image of a video into a plane prediction model, and acquiring a predicted plane mask of the video frame image, wherein the plane prediction model is obtained by training a deep learning model using training images with labels of a plane detection frame and a plane mask; and
embedding the image to be embedded into the predicted plane mask of the video frame image.

In some embodiments, the plane prediction model is obtained by training the deep learning model using the training images with the labels of the plane detection frame and the plane mask as well as labeling information of 4 key points in the plane mask; the acquiring step comprises: after inputting the video frame image of the video into the plane prediction model, acquiring the predicted plane mask of the video frame image as well as the 4 key points in the plane mask; and the embedding the image to be embedded into the predicted plane mask of the video frame image comprises: aligning 4 vertexes of the image to be embedded with the 4 key points in the predicted plane mask of the video frame image, and embedding the image to be embedded into a position region corresponding to the 4 key points in the predicted plane mask of the video frame image.

In some embodiments, the labelling information of the 4 key points in the plane mask in each training image is obtained by:

converting the plane mask of the each training image from a pixel coordinate system to a plane coordinate system;
determining a boundary line of the plane mask in the plane coordinate system;
determining an inscribed rectangle of the plane mask in the plane coordinate system based on the boundary line of the plane mask; and
converting 4 vertices of the inscribed rectangle of the plane mask from the plane coordinate system to the pixel coordinate system.

In some embodiments, the converting the plane mask of the each training image from a pixel coordinate system to a plane coordinate system comprises:

converting the plane mask of the each training image from the pixel coordinate system to a world coordinate system; and
converting the plane mask of the each training image from the world coordinate system to the plane coordinate system.

In some embodiments, the determining a boundary line of the plane mask in the plane coordinate system comprises:

performing edge detection on the plane mask in the plane coordinate system;
performing Hough line detection on the plane mask in the plane coordinate system based on a detected edge of the plane mask;
determining a probability that each detected line is the boundary line of the plane mask; and
determining one boundary line of the plane mask in the plane coordinate system from the detected lines based on the probability.

In some embodiments, the determining a probability that each detected line is the boundary line of the plane mask comprises:
determining the probability that each detected line is the boundary line of the plane mask according to difference information of symmetrical regions on both sides of the each detected line, wherein the greater the difference between the symmetrical regions on the both sides of a line, the greater the probability that the line is the boundary line of the plane mask.

In some embodiments, the determining one boundary line of the plane mask in the plane coordinate system from the detected lines comprises:

choosing a pair of lines having a perpendicular relation or a parallel relation from the detected lines;
under the condition that the pair of lines is found, determining a line with a greatest probability in the pair of lines with a greatest sum of probabilities as the one boundary line of the plane mask in the plane coordinate system; and
under the condition that the pair of lines is not found, determining a line with a greatest probability as the one boundary line of the plane mask in the plane coordinate system.

In some embodiments, the determining a boundary line of the plane mask in the plane coordinate system further comprises at least one of:

performing median filtering on the plane mask in the plane coordinate system before the edge detection; or
merging the detected lines based on a slope of each line after the Hough line detection.

In some embodiments, the determining an inscribed rectangle of the plane mask in the plane coordinate system comprises: determining an inscribed rectangle of the plane mask in the plane coordinate system, wherein the inscribed rectangle is parallel to the boundary line and comprises a maximum inscribed square.

In some embodiments, the embedding the image to be embedded into the predicted plane mask of the video frame image comprises:

determining a transformation matrix from the image to be embedded to the predicted plane mask of the video frame image according to a mapping relation between the 4 vertexes of the image to be embedded and the 4 key points in the plane mask of the predicted video frame image; and
transforming each foreground point of the image to be embedded into the position region corresponding to the 4 key points in the predicted plane mask of the video frame image based on the transformation matrix.

In some embodiments, the deep learning model uses a loss function that is determined based on the 4 key points in the labelling information and the predicted 4 key points after the alignment operation is performed, wherein performing the alignment operation on the predicted 4 key points comprises:

determining a transformation ratio based on the 4 key points in the labelling information and the predicted 4 key points;
performing size transformation on the predicted 4 key points according to the transformation ratio;
determining first position transformation information based on the 4 key points in the labelling information;
determining second position transformation information based on the predicted 4 key points; and
respectively adding the first position transformation information to the predicted 4 key points after the size transformation and subtracting the second position transformation information, to finish the alignment operation on the predicted 4 key points.

In some embodiments, the deep learning model comprises region-based convolutional neural networks.
In some embodiments, the image to be embedded comprises an enterprise identification image and a product image.
According to some embodiments of the present disclosure, there is provided a method of acquiring a plane prediction model, comprising:

labelling a plane detection frame, a plane mask in each training image and 4 key points in the plane mask;
training a deep learning model using the training images with labels of the plane detection frame and the plane mask as well as labelling information of the 4 key points in the plane mask; and
determining the trained deep learning model as the plane prediction model.

In some embodiments, the labelling 4 key points in the plane mask in each training image comprises:

converting the plane mask of the each training image from a pixel coordinate system to a plane coordinate system;
determining a boundary line of the plane mask in the plane coordinate system;
determining an inscribed rectangle of the plane mask in the plane coordinate system based on the boundary line of the plane mask; and
converting 4 vertices of the inscribed rectangle of the plane mask from the plane coordinate system to the pixel coordinate system.

According to some embodiments of the present disclosure, there is provided an apparatus of embedding an image in a video, comprising: a memory; and a processor coupled to the memory, wherein the processor is configured to perform the method of embedding an image in a video according to any of the embodiments based on instructions stored in the memory.
According to some embodiments of the present disclosure, there is provided an apparatus of acquiring a plane prediction model, comprising: a memory; and a processor coupled to the memory, wherein the processor is configured to perform the method of acquiring a plane prediction model according to any of the embodiments based on instructions stored in the memory.
According to some embodiments of the present disclosure, there is provided a non-transitory computer-readable storage medium stored a computer program which implements the method of embedding an image in a video according to any of the embodiments or the method of acquiring a plane prediction model according to any of the embodiments when executed by a processor.

**BRIEF DESCRIPTION OF THE DRAWINGS**

The accompanying drawings that need to be used in the description of the embodiments or related art will be briefly described below. The present disclosure can be more clearly understood from the following detailed description, which proceeds with reference to the accompanying drawings.
It is apparent that the drawings in the following description are merely some embodiments of the present disclosure, and for one of ordinary skill in the art, other drawings can be derived from these drawings without paying out creative labor.

Fig. 1 illustrates a flow diagram of a method of acquiring a plane prediction model according to some embodiments of the present disclosure.

Fig. 2 illustrates a flow diagram of a method of acquiring a plane prediction model according to other embodiments of the present disclosure.

Fig. 3 illustrates a schematic diagram of a deep learning model according to some embodiments of the present disclosure.

Fig. 4 illustrates a flow diagram of labelling 4 key points in a plane mask in a training image according to some embodiments of the present disclosure.

Fig. 5 illustrates a schematic diagram of three coordinate systems according to some embodiments of the present disclosure.

Fig. 6 illustrates a flow diagram of a method of embedding an image in a video according to some embodiments of the present disclosure.

Fig. 7 illustrates a flow diagram of a method of embedding an image in a video according to other embodiments of the present disclosure.

Fig. 8 illustrates a schematic diagram of an apparatus of embedding an image in a video according to some embodiments of the present disclosure.

Fig. 9 illustrates a schematic diagram of an apparatus of acquiring a plane prediction model according to some embodiments of the present disclosure.

## DETAILED DESCRIPTION

The technical solutions in the embodiments of the present disclosure will be clearly and completely described below in conjunction with the drawings in the embodiments of the present disclosure.

Unless specified otherwise, words such as "first", "second", etc. in this disclosure are used for distinguishing different objects, and are not used for indicating the meaning of size or time sequence, etc.

In the embodiments of the present disclosure, by means of a plane prediction model, a plane mask widely existing in each video frame image is automatically found, and an image to be embedded is embedded into the plane mask, which not only makes the image automatically and naturally fused into a video, but also makes the image more widely fused into the video. In addition, key points in the plane mask in each video frame image can also be automatically found, and the image to be embedded is embedded into a position region corresponding to the key points, thereby improving the fusion effect of the image and the video.

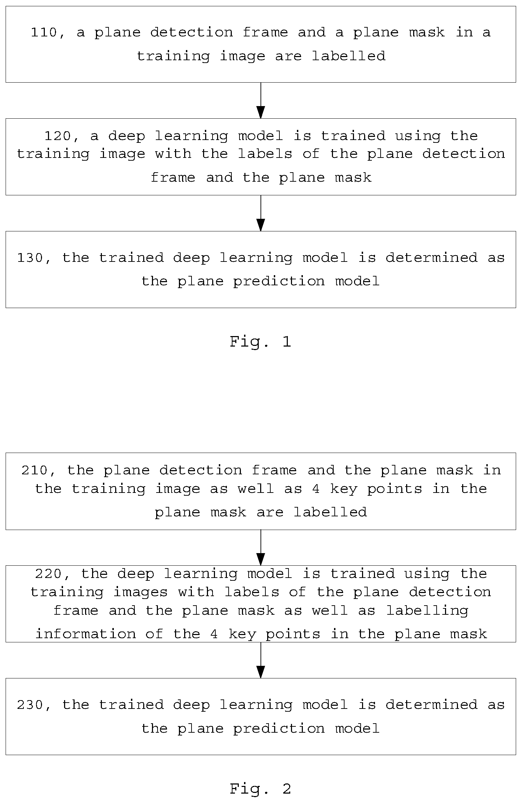

Fig. 1 illustrates a flow diagram of a method of acquiring a plane prediction model according to some embodiments of the present disclosure. The plane prediction model is capable of predicting a plane mask in an image.

As shown in Fig. 1, the method of this embodiment comprises steps 110 to 130.

In step 110, a plane detection frame and a plane mask in a training image are labelled.

The plane detection frame and the plane mask in the training images can be labelled by itself, or a ready-made dataset of the training images already labelled with the plane detection frame and the plane mask can also be acquired, for example, a PlaneRCNN dataset, which not only can provide the training images with labels of the plane detection frame and the plane mask, but also can provide camera parameters related to the training images, and a rotation/translation matrix from a camera coordinate system to a world coordinate system.

In step 120, a deep learning model is trained using the training image with the labels of the plane detection frame and the plane mask, so that the deep learning model has learning abilities of the plane detection frame and the plane mask of the image.

The deep learning model comprises region-based convolutional neural networks (RCNN), for example, MaskRCNN network, which is a type of RCNN. The deep learning model such as the MaskRCNN network comprises a branch of plane detection frame regression and a branch of plane mask regression of the image. The branch of the plane detection frame regression comprises the plane detection frame regression and can also comprise semantic category regression. Training images with the label of the plane detection frame train the branch of the plane detection frame regression, and training images with the label of the plane mask train the branch of the plane mask regression.

In a training process, a total loss is determined according to a loss between the label of the labelled plane detection frame and the model-predicted plane detection frame and a loss between the label of the labelled plane mask and the model-predicted plane mask, of each training image, parameters of the deep learning model are updated according to the total loss, and the training process is iteratively executed until a training termination condition is met, for example, a preset number of iterations is reached, or the total loss is less than a certain value, and the like.

In step 130, the trained deep learning model is determined as the plane prediction model. The plane prediction model can predict the plane detection frame of the image and the plane mask in the plane detection frame.

Fig. 2 illustrates a flow diagram of a method of acquiring a plane prediction model according to other embodiments of the present disclosure. The plane prediction model can predict not only the plane mask in the image but also 4 key points in the plane mask.

As shown in Fig. 2, the method of this embodiment comprises: step 210 to 230.

In step 210, the plane detection frame and the plane mask in the training image as well as 4 key points in the plane mask are labelled.

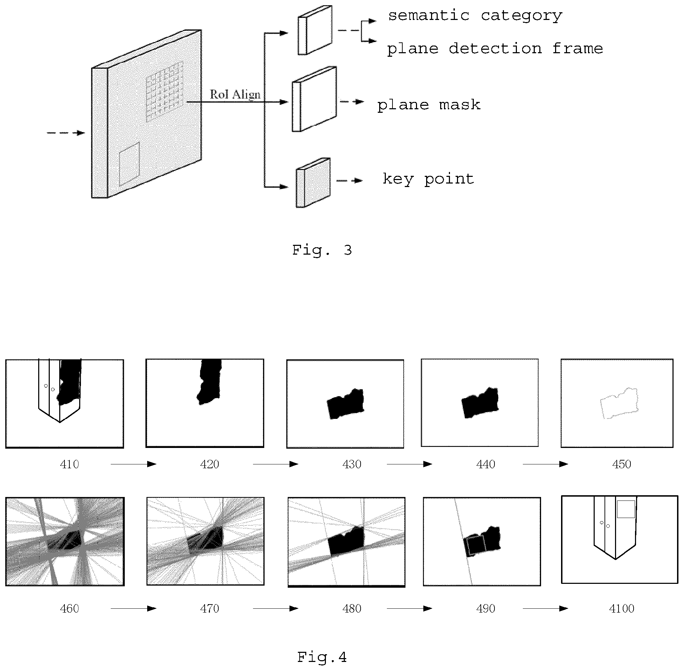

The 4 key points in the plane mask can be labelled, for example, in the middle of the plane mask. A method of labelling the 4 key points in the plane mask will be specifically described in a subsequent embodiment of Fig. 4.

In step 220, the deep learning model is trained using the training images with labels of the plane detection frame and the plane mask as well as labelling information of the 4 key points in the plane mask, so that the deep learning model has learning abilities of the plane detection frame, the plane mask of the image and the 4 key points thereof.

The deep learning model comprises RCNN, such as MaskRCNN network, which is one type of RCNN. Fig. 3 illustrates a schematic diagram of a deep learning model. As shown in Fig. 3, the deep learning model such as the MaskRCNN network comprises a branch of plane detection frame regression, a branch of plane mask regression, and a branch of key point regression of the image. The branch of the plane detection frame regression comprises the plane detection frame regression and can also comprise semantic category regression. Training images with the label of the plane detection frame train the branch of the plane detection frame regression, training images with the label of the plane mask train the branch of the plane mask regression, and training images with the labelling information of the 4 key points train the branch of the key point regression. The MaskRCNN network obtains a proposal region from the original image by using a method of RoIAlign (region of interest align).

Since the image embedding position on a plane has a movable property, as long as the image embedding position is on the plane and the image and boundary lines of of the plane are parallel to each other, a result predicted by the deep learning model is considered to be correct, so a loss function adopted by the deep learning model is a loss function after the key points are aligned, i.e., a loss function that is determined based on the 4 key points in the labelling information and the predicted 4 key points after alignment operation is performed. For example, the MaskRCNN network adopts Smooth_L1 loss after the key points are aligned.

Let key point label labelled on the current plane be $gt \in R^{N \times 4 \times 2}$, and a key point coordinate predicted by the network be $pre \in R^{N \times 4 \times 2}$, where in a dimension space R, N denotes the number of planes, 4 denotes 4 key points, and 2 denotes an abscissa and ordinate of the plane. If a coordinate of an aligned key point is $pre''$ and a loss of a network key point branch is $loss_k$, $loss_k$ is calculated as follows (1 to 6).

(1) Based on the 4 key points in the labelling information and the predicted 4 key points, determine a transformation ratio $r$.

$$r = \frac{\max(gt) - \min(gt)}{\max(pre) - \min(pre)}$$

where max denotes taking a maximum value, and min denotes taking a minimum value.

(2) According to the transformation ratio, perform size transformation on the predicted 4 key points, and set the predicted key points after the size transformation to be $pre'$.

$$pre' = (pre - \min(pre)) * r + \min(pre)$$

(3) Based on the 4 key points in the labelling information, determine first position transformation information $gt_c$.

$$gt_c = \frac{\max(gt) - \min(gt)}{2} + \min(gt)$$

(4) Based on the predicted 4 key points, determine second position transformation information $pre'_c$.

$$pre'_c = \frac{\max(pre') - \min(pre')}{2} + \min(pre')$$

(5) Respectively add the first position transformation information to the predicted 4 key points after the size transformation and subtract the second position transformation information to finish the alignment operation on the predicted 4 key points, wherein the aligned key points is set as $pre''$.

$$pre'' = pre' + gt_c - pre'_c$$

(6) the loss $loss_k$ of the network key point branch is:

$$loss_k = \frac{1}{4N} \sum_{1 \leq j \leq N} \sum_{i \in \{1,2,3,4\}} \text{smooth}_{L1}(gt_i^j - pre''_i^j).$$

The alignment operation on the 4 key points is performed, so that a quadrilateral region formed by the 4 key points is in the middle of the plane mask.

In the training process, a total loss is determined according to a loss between the label of the labelled plane detection frame and the model-predicted plane detection frame, a loss between the label of the labelled plane mask and the model-predicted plane mask, and a loss between the labelled 4 key points and the predicted 4 key points after the alignment operation, of each training image, parameters of the deep learning model are updated according to the total loss, and the training process is iteratively executed until a training termination condition is met, for example, a preset number of iterations is reached, or the total loss is less than a certain value, and the like.

In step 230, the trained deep learning model is determined as the plane prediction model. The plane prediction model can predict the plane detection frame of the image, the plane mask in the plane detection frame, and the 4 key points in the plane mask.

Fig. 4 illustrates a flow diagram of labelling 4 key points in a plane mask in a training image according to some embodiments of the present disclosure.

As shown in Fig. 4, the method of this embodiment comprises the following steps.

In step 410, one training image containing a plane is acquired.

Many images have therein contained planes, which are, for example, but not limited to, a desktop, a wall surface, various surfaces of a cabinet, a floor, etc. In Fig. 4, a side surface of one cabinet is shown.

In step 420, a plane mask of the training image in the pixel coordinate system is acquired.

As described above, the plane mask of the training image in the pixel coordinate system can be acquired by means of labelling, or the training image and its plane mask in the pixel coordinate system can be acquired through the ready-made PlaneRCNN dataset.

In step 430, the plane mask of the training image is converted from the pixel coordinate system to the plane coordinate system, which comprises (1-2):

(1) According to the camera parameter related to the training image, and the rotation/translation matrix from the camera coordinate system to the world coordinate system, convert the plane mask of the training image from the pixel coordinate system to the world coordinate system.

A coordinate in the pixel coordinate system is: a coordinate on an image obtained after a camera shoots a scene, and the pixel coordinate system is a two-dimensional coordinate system.

A coordinate of a foreground point in the plane mask of the training image in the pixel coordinate system is set as $S_{img} = \left\{ s^1_{img}, \ldots, s^N_{img} \right\}$, and a coordinate of a foreground point in the plane mask of the training image in the world coordinate system is set as $S_{world} = \left\{ s^1_{world}, \ldots, s^N_{world} \right\}$, where N denotes the number of the foreground points.

(2) Convert the plane mask of the training image from the world coordinate system to the plane coordinate system.

A coordinate in the plane coordinate system is: equivalent to a coordinate on an image obtained after the camera right in front of the plane shoots the plane, and in the plane coordinate system, a depth value of each foreground point on the plane is the same. The plane coordinate system is a two-dimensional coordinate system.

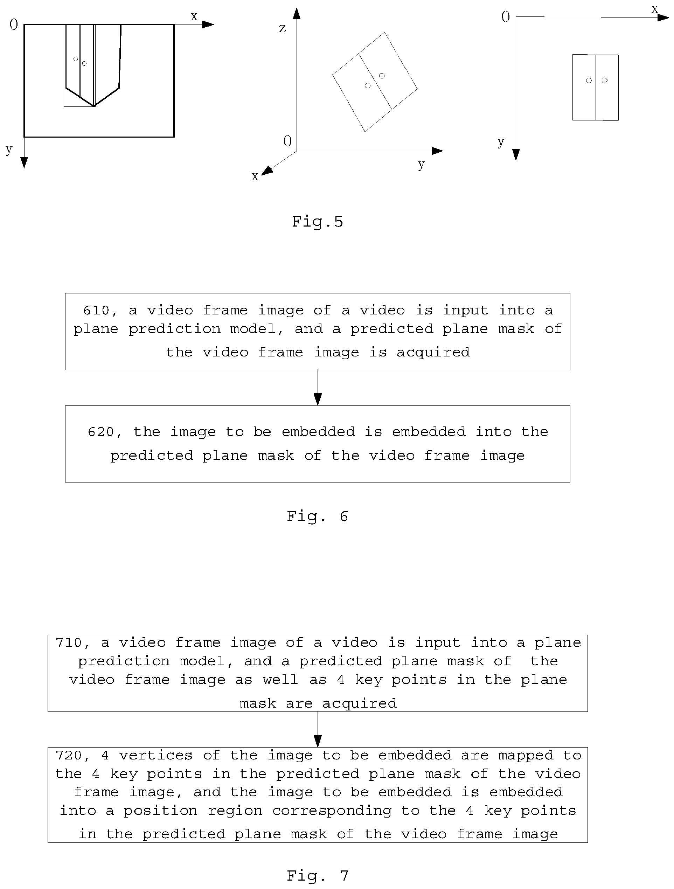

Fig. 5 illustrates schematic diagrams of three coordinate systems. They are a pixel coordinate system, a world coordinate system and a plane coordinate system in this order from left to right.

A coordinate of a foreground point in the plane mask in the plane coordinate system is set as $S_{plane} = \left\{ s^1_{plane}, \ldots, s^N_{plane} \right\}$.

Two points $A = (x_1, y_1, z_1) \in S_{world}$, $B = (x_2, y_2, z_2) \in S_{world}$ in the plane mask are found in the world coordinate system, and then one point $C = (x_3, y_3, z_3)$ on an instance is found in the world coordinate system, so that $\overrightarrow{AC} \perp \overrightarrow{AB}$. The plane coordinate system is constructed by taking A as an origin, $\overrightarrow{AB}$ as an x-axis and $\overrightarrow{AC}$ as a y-axis.

A coordinate of the point C is calculated.

It is given that a normal of the instance is $\vec{n} = (a, b, c)$, and an offset is $d$, $A = (x_1, y_1, z_1)$, $B = (x_2, y_2, z_2)$, and since $\overrightarrow{AC} \perp \overrightarrow{AB}$ and a plane normal where the point C is located is $\vec{n}$, the following relation is obtained:

$$\begin{cases} ax_3 + by_3 + cz_3 = d \\ (x_3 - x_1)(x_2 - x_1) + (y_3 - y_1)(y_2 - y_1) + (z_3 - z_1)(z_2 - z_1) = 0 \end{cases}$$

If the vector $\overrightarrow{AC}$ is in parallel with the x-axis, $(x_3, y_3, z_3) = (x_1, y_1, z_1 + 1)$; otherwise, if the vector $\overrightarrow{AC}$ is not in parallel with the x-axis,

$$x_3 = 0$$

$$y_3 = \frac{cx_1(x_2 - x_1) + cy_1(y_2 - y_1) + cz_1(z_2 - z_1) - d * (z_2 - z_1)}{c * (y_2 - y_1) - b * (z_2 - z_1)}$$

$$z3 = \frac{(d - ax_3 - by_3)}{c}$$

Therefore, the points $A = (x_1 y_1 z_1)$, $B = (x_2, y_2, z_2)$, $C = (x_3, y_3, z_3)$ in the world coordinate system are obtained.

Since **A** is the origin in the plane coordinate system and $\overrightarrow{AC} \perp \overrightarrow{AB}$, the coordinates of the points A, B, C in the plane coordinate system respectively are:

$$A' = (0, 0, 0)$$

$$B' = \left( \left| \overrightarrow{AB} \right|, 0, 0 \right)$$

$$C' = \left( 0, \left| \overrightarrow{AC} \right|, 0 \right)$$

According to the coordinates of the three points in the world coordinate system and the plane coordinate system, a transformation matrix **M** between the world coordinate system and the plane coordinate system is obtained, and according to the transformation matrix **M,** $s^i_{plane}$ can be calculated by:

$$s^i_{plane} = M s^i_{world}$$

Therefore, $S_{plane} = \left\{ s^1_{plane}, \ldots, s^N_{plane} \right\}$, that is, the coordinate of the foreground point of the plane mask in the plane coordinate system is obtained.

Each plane has its own plane coordinate system, and in the plane coordinate system, an inscribed rectangle (such as a maximum inscribed square) of the plane mask can be more easily found, wherein 4 vertexes are taken as the 4 key points.

In step 440, median filtering on the plane mask in the plane coordinate system is performed, denoted as: *mask = MedianFilter(mask)*, where the mask on a right side of **=** is the plane mask before the filtering, and the mask on a left side of **=** is the plane mask after the filtering.

The median filtering is a nonlinear smoothing technique, in which a gray value of each pixel is set as a median of gray values of all pixels within a certain neighborhood window of the point.

In step 450, edge detection on the plane mask is performed in the plane coordinate system, denoted as: *edges = Edge(mask)*.

The edge detection technique can refer to the prior art.

In step 460, based on a detected edge of the plane mask, Hough line detection on the plane mask is performed in the plane coordinate system, denoted as: *lines = HoughLineDetect(edges)*. The Hough line detection method can refer to the prior art.

Further, lines *keep_lines* in which the number of pixels is greater than a set threshold *voteThresh* are screened out from the detected lines : *keep_lines = {line$_j$|line$_j$(pixel) ≥ voteThresh, line$_j$ ∈ lines}* ,wherein *lines$_j$(pixel)* denotes the number of pixels contained in a jth line detected on the plane mask.

In step 470, based on a slope of the line, the detected lines are merged, denoted as: *merge_lines = MergeLine(keep_lines)*, wherein *MergeLine()* denotes that lines with similar slopes are merged into one line.

In step 480, a probability that the detected line is a boundary line of the plane mask is determined, and a pair of lines having a perpendicular relation or a parallel relation is chosen from the detected lines, denoted as: *choose_lines = ChooseLine(merge_ines)*.

According to difference information of symmetrical regions on both sides of the line, the probability that the detected line is the boundary line of the plane mask is determined, denoted as:

$$score_k = \frac{1}{valueThresh*N} |region1(line_k) - region2(line_k)| \qquad ,$$

$$line_k \in merge\_lines$$

where **region1(line$_k$)** and **region2(line$_k$)** respectively denote a symmetric region with a fixed width on both sides of the line *line$_k$,* N is the number of pixels in the region, and *valueThresh* is a set threshold. The greater the difference between the symmetric regions on the both sides of the line, the greater the probability that the line is the boundary line of the plane mask.

In step 490, under the condition that the pair of lines is found, a line with a greatest probability in a pair of lines with a greatest sum of probabilities is determined as one boundary line of the plane mask in the plane coordinate system; and under the condition that the pair of lines is not found, a line with a greatest probability is determined as one boundary line of the plane mask in the plane coordinate system, thereby obtaining the boundary line of the plane mask in the plane coordinate system, denoted as *BestLine = getBestLine(choose_lines)*. Based on the boundary line, an inscribed rectangle of the plane mask is determined in the plane coordinate system.

In the plane coordinate system, an inscribed rectangle of the plane mask that is parallel to the boundary line is determined, wherein the inscribed rectangle is, for example, a maximum inscribed square, denoted as *square = MaxInscribedSquare(mask)* , wherein *square_edge$_j$// BestLine,* and four vertexes of the maximum inscribed square are

$$P_{plane} = \{p_{plane}^1, p_{plane}^2, p_{plane}^3, p_{plane}^4\}.$$

In step 4100, 4 vertices of the inscribed rectangle of the plane mask are converted from the plane coordinate system to the pixel coordinate system.

As described above, the coordinate $S_{img} = \{s_{img}^1, ..., s_{img}^N\}$ of the foreground point in the plane mask of the training image in the pixel coordinate system, and the coordinate $S_{plane} = \{s_{plane}^1, ..., s_{plane}^N\}$ of the foreground point of the plane mask in the plane coordinate system are known, thereby obtaining the transformation matrix T of the pixel coordinate system and the plane coordinate system, that is, $s^i_{plane} = T s^i_{img}$. Based on

the above determined 4 vertexes $p^i_{plane}$ of the inscribed rectangle in the plane mask in the plane coordinate system, the coordinates of the 4 key points in the plane mask of the training image in the pixel coordinate system are determined,

denoted as: $p^i_{img} = T^{-1} p^i_{plane}$.

The 4 key points inscribed in the plane mask in the training image are automatically found and used as the training data to train the model, so that the model can predict the 4 key points inscribed in the plane mask in the video frame image, so as to embed the image into the proper position in the video frame image, thereby further improving the fusion effect of the image and the video.

Fig. 6 illustrates a flow diagram of a method of embedding an image in a video according to some embodiments of the present disclosure.

As shown in Fig. 6, the method of this embodiment comprises: step 610 to 620.

In step 610, a video frame image of a video is input into a plane prediction model, and a predicted plane mask of the video frame image is acquired.

The plane prediction model is obtained by training a deep learning model using training images with labels of a plane detection frame and a plane mask, and reference is made to the foregoing embodiments for details.

In step 620, the image to be embedded is embedded into the predicted plane mask of the video frame image.

For example, the image to be embedded is embedded into a position region in the plane mask that is parallel to a boundary line of the plane mask.

Examples of the images to be embedded include, but are not limited to, business identification images, product images, character images, and advertisement images.

The plane mask widely existing in the video frame image are automatically found, and the image to be embedded is embedded into the plane mask, which not only makes the image automatically and naturally fused into the video, but also makes the image more widely fused into the video.

Fig. 7 is a flow diagram illustrating a method of embedding an image in a video according to other embodiments of the present disclosure.

As shown in Fig. 7, the method of this embodiment comprises: steps 710 to 720.

In step 710, a video frame image of a video is input into a plane prediction model, and a predicted plane mask of the video frame image as well as 4 key points in the plane mask are acquired.

The plane prediction model is obtained by training a deep learning model using training images with labels of a plane detection frame and a plane mask as well as labelling information of 4 key points in the plane mask, and reference is made to the foregoing embodiments for details.

In step 720, 4 vertices of the image to be embedded are mapped to the 4 key points in the predicted plane mask of the video frame image, and the image to be embedded is embedded into a position region corresponding to the 4 key points in the predicted plane mask of the video frame image.

Specifically, according to a mapping relation between the 4 vertices (whose coordinates are $(\mathbf{0}, \mathbf{0})$, $(\mathbf{w}, \mathbf{0})$, $(\mathbf{0}, \mathbf{h})$, $(\mathbf{w}, \mathbf{h})$) of the image $I^{ad}$ (whose resolution is $\mathbf{w} \times \mathbf{h}$) to be embedded and the 4 key points $\mathbf{pre''}$ in the predicted plane mask of the video frame image $I^{rgb}$, a transformation matrix $M \in \mathbf{R}^{3*3}$ from the image $I^{ad}$ to be embedded to the predicted plane mask of the video frame image $I^{rgb}$ is determined; and based on the transformation matrix, each foreground point of the image to be embedded is transformed into the position region corresponding to the 4 key points in the predicted plane mask of the video frame image, that is, for each pixel $\mathbf{p}^{rgb} \in \mathbf{R}^{1*2}$ of the position region formed by the 4 key points on $I^{rgb}$, by $[\mathbf{p}^{ad}, \mathbf{1}]^T = M[\mathbf{p}^{rgb}, \mathbf{1}]^T$, a pixel $\mathbf{p}^{ad} \in \mathbf{R}^{1*2}$ corresponding to $\mathbf{p}^{rgb}$ is found on $I^{ad}$, and finally, a pixel value of $\mathbf{p}^{ad}$ is assigned to $\mathbf{p}^{rgb}$.

The plane mask widely existing in each video frame image and the 4 key points in the plane mask are automatically found, and the image to be embedded is embedded into the position region corresponding to the 4 key points in the plane mask, which not only makes the image automatically, naturally, and widely fused into the video, but also improves the fusion effect of the image and the video.

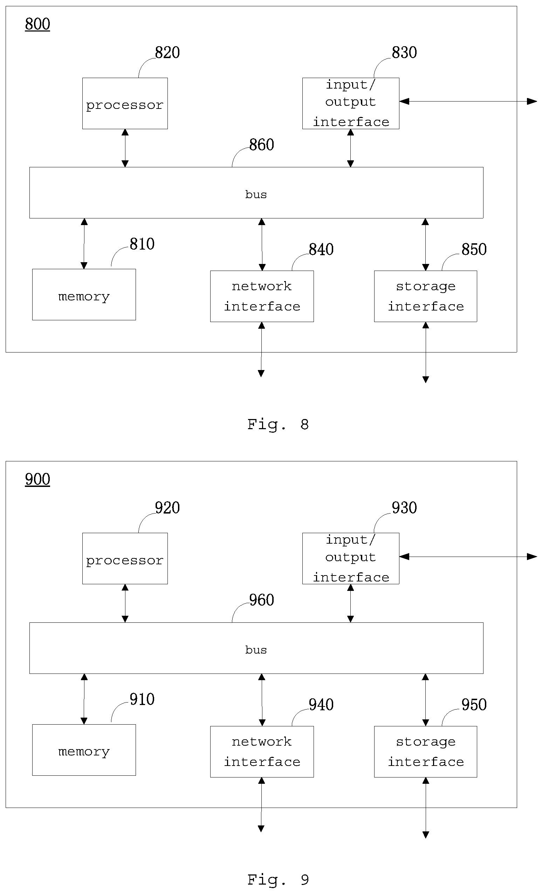

Fig. 8 illustrates a schematic diagram of an apparatus of embedding an image in a video according to some embodiments of the present disclosure.

As shown in Fig. 8, the apparatus 800 of embedding an image in a video of this embodiment comprises: a memory 810 and a processor 820 coupled to the memory 810, wherein the processor 820 is configured to perform the method of embedding an image in a video in any of the embodiments described above based on instructions stored in the memory 810.

The memory 810 can include, for example, a system memory, a fixed non-volatile storage medium, and the like. The system memory has thereon stored, for example, an operating system, an application, a boot loader, and other programs.

The apparatus 800 can also include an input/output interface 830, a network interface 840, a storage interface 850, and the like. These interfaces 830, 840, 850, as well as the memory 810 and the processor 820, can be connected, for example, through a bus 860. The input/output interface 830 provides a connection interface for an input/output device such as a display, a mouse, a keyboard, and a touch screen. The network interface 840 provides a connection interface for a variety of networking devices. The storage interface 850 provides a connection interface for an external storage device such as a SD card and a USB flash disk.

Fig. 9 illustrates a schematic diagram of an apparatus of acquiring a plane prediction model according to some embodiments of the present disclosure.

As shown in Fig. 9, the apparatus of acquiring a plane prediction model 900 of this embodiment comprises: a memory 910 and a processor 920 coupled to the memory 910, wherein the processor 920 is configured to perform the method of acquiring a plane prediction model in any of the embodiments described above based on instructions stored in the memory 910.

The memory 910 can include, for example, a system memory, a fixed non-volatile storage medium, and the like. The system memory has thereon stored, for example, an operating system, an application program, a boot loader, and other programs.

The apparatus 900 can also comprise an input/output interface 930, a network interface 940, a storage interface 950, and the like. These interfaces 930, 940, 950, as well as the memory 910 and the processor 920 can be connected, for example, through a bus 960. The input/output interface 930 provides a connection interface for an input/output device such as a display, a mouse, a keyboard, and a touch screen. The network interface 940 provides a connection interface for a variety of networking devices. The storage interface 950 provides a connection interface for an external storage device such as a SD card and a USB flash disk.

The apparatus 800 of embedding an image in a video can be different from or the same as the apparatus 900 of acquiring a plane prediction model. For example, the apparatus 800 of embedding an image in a video and the apparatus 900 of acquiring a plane prediction model can be disposed on one computer, or disposed on two computers.

According to some embodiments of the present disclosure, there is provided a non-transitory computer-readable storage stored a computer program which implements the method of embedding an image in a video or the method of acquiring a plane prediction model when executed by a processor.

It should be appreciated by those skilled in the art that, the embodiments of the present disclosure can be provided as a method, system, or computer program product. Accordingly, the present disclosure can take a form of an entire hardware embodiment, an entire software embodiment or an embodiment combining software and hardware aspects. Furthermore, the present disclosure can take a form of a computer program product implemented on one or more non-transitory computer-readable storage media (including, but not limited to, disk memories, CD-ROMs, optical memories, etc.) having computer program code embodied therein.

The present disclosure is described with reference to flow diagrams and/or block diagrams of the method, apparatus (system), and computer program product according to the embodiments of the present disclosure. It will be understood that each flow and/or block in the flow diagrams and/or block diagrams, and a combination of flows and/or blocks in the flow diagrams and/or block diagrams, can be implemented by computer program instructions. These computer program instructions can be provided to a processor of a general-purpose computer, special-purpose computer, embedded processor, or other programmable data processing devices to produce a machine, such that the instructions, which are executed by the processor of the computer or other programmable data processing devices, create means for implementing the function specified in one or more flows of the flow diagrams and/or one or more blocks of the block diagrams.

These computer program instructions can also be stored in a computer-readable memory that can guide a computer or other programmable data processing devices to work in a specific manner, such that the instructions stored in the computer-readable memory produce an article of manufacture including instruction means which implement the function specified in one or more flows of the flow diagrams and/or one or more blocks of the block diagrams.

These computer program instructions can also be loaded onto a computer or other programmable data processing devices, such that a series of operation steps are performed on the computer or other programmable devices to produce a computer-implemented process, and therefore, the instructions executed on the computer or other programmable devices provide steps for implementing the function specified in one or more flows of the flow diagrams and/or one or more blocks of the block diagrams.

The above description is only the preferred embodiments of the present disclosure and not used for limiting the present disclosure, and any modifications, equivalents, improvements and the like that are within the spirit and scope of the present disclosure should be included in the protection scope of the present disclosure.

**Claims**

1. A method of embedding an image in a video, comprising:

    inputting a video frame image of a video into a plane prediction model, and acquiring a predicted plane mask of the video frame image, wherein the plane prediction model is obtained by training a deep learning model using training images with labels of a plane detection frame and a plane mask; and
    embedding the image to be embedded into the predicted plane mask of the video frame image.

2. The method according to claim 1, wherein the plane prediction model is obtained by training the deep learning model using the training images with the labels of the plane detection frame and the plane mask as well as labeling information of 4 key points in the plane mask;

    the acquiring step comprises: after inputting the video frame image of the video into the plane prediction model, acquiring the predicted plane mask of the video frame image as well as the 4 key points in the plane mask; and
    the embedding the image to be embedded into the predicted plane mask of the video frame image comprises: aligning 4 vertexes of the image to be embedded with the 4 key points in the predicted plane mask of the video frame image, and embedding the image to be embedded into a position region corresponding to the 4 key points in the predicted plane mask of the video frame image.

3. The method according to claim 2, wherein the labelling information of the 4 key points in the plane mask in each training image is obtained by:

    converting the plane mask of the each training image from a pixel coordinate system to a plane coordinate system;
    determining a boundary line of the plane mask in the plane coordinate system;
    determining an inscribed rectangle of the plane mask in the plane coordinate system based on the boundary line of the plane mask; and
    converting 4 vertices of the inscribed rectangle of the plane mask from the plane coordinate system to the pixel coordinate system.

4. The method according to claim 3, wherein the converting the plane mask of the each training image from a pixel coordinate system to a plane coordinate system comprises:

    converting the plane mask of the each training image from the pixel coordinate system to a world coordinate system; and
    converting the plane mask of the each training image from the world coordinate system to the plane coordinate system.

5. The method according to claim 3, wherein the determining a boundary line of the plane mask in the plane coordinate system comprises:

    performing edge detection on the plane mask in the plane coordinate system;
    performing Hough line detection on the plane mask in the plane coordinate system based on a detected edge of the plane mask;
    determining a probability that each detected line is the boundary line of the plane mask; and
    determining one boundary line of the plane mask in the plane coordinate system from the detected lines based on the probability.

6. The method according to claim 5, wherein the determining a probability that each detected line is the boundary line of the plane mask comprises:
    determining the probability that each detected line is the boundary line of the plane mask according to difference information of symmetrical regions on both sides of the each detected line, wherein the greater the difference between the symmetrical regions on the both sides of a line, the greater the probability that the line is the boundary line of the plane mask.

7. The method according to claim 5, wherein the determining one boundary line of the plane mask in the plane coordinate system from the detected lines comprises:

choosing a pair of lines having a perpendicular relation or a parallel relation from the detected lines;

under the condition that the pair of lines is found, determining a line with a greatest probability in the pair of lines with a greatest sum of probabilities as the one boundary line of the plane mask in the plane coordinate system; and

under the condition that the pair of lines is not found, determining a line with a greatest probability as the one boundary line of the plane mask in the plane coordinate system.

8. The method according to claim 5, wherein the determining a boundary line of the plane mask in the plane coordinate system further comprises at least one of:

performing median filtering on the plane mask in the plane coordinate system before the edge detection; or
merging the detected lines based on a slope of each line after the Hough line detection.

9. The method according to claim 3, wherein the determining an inscribed rectangle of the plane mask in the plane coordinate system comprises:
determining an inscribed rectangle of the plane mask in the plane coordinate system, wherein the inscribed rectangle is parallel to the boundary line and comprises a maximum inscribed square.

10. The method according to claim 2, wherein the embedding the image to be embedded into the predicted plane mask of the video frame image comprises:

determining a transformation matrix from the image to be embedded to the predicted plane mask of the video frame image according to a mapping relation between the 4 vertexes of the image to be embedded and the 4 key points in the plane mask of the predicted video frame image; and

transforming each foreground point of the image to be embedded into the position region corresponding to the 4 key points in the predicted plane mask of the video frame image based on the transformation matrix.

11. The method according to claim 2, wherein

the deep learning model uses a loss function that is determined based on the 4 key points in the labelling information and the predicted 4 key points after the alignment operation is performed,

wherein performing the alignment operation on the predicted 4 key points comprises:

determining a transformation ratio based on the 4 key points in the labelling information and the predicted 4 key points;

performing size transformation on the predicted 4 key points according to the transformation ratio;

determining first position transformation information based on the 4 key points in the labelling information;

determining second position transformation information based on the predicted 4 key points; and

respectively adding the first position transformation information to the predicted 4 key points after the size transformation and subtracting the second position transformation information, to finish the alignment operation on the predicted 4 key points.

12. The method according to any of claims 1 to 11, wherein

the deep learning model comprises region-based convolutional neural networks; or
the image to be embedded comprises an enterprise identification image and a product image.

13. A method of acquiring a plane prediction model, comprising:

labelling a plane detection frame, a plane mask in each training image and 4 key points in the plane mask;
training a deep learning model using the training images with labels of the plane detection frame and the plane mask as well as labelling information of the 4 key points in the plane mask; and
determining the trained deep learning model as the plane prediction model.

14. The method according to claim 13, wherein the labelling 4 key points in the plane mask in each training image comprises:

converting the plane mask of the each training image from a pixel coordinate system to a plane coordinate system;

determining a boundary line of the plane mask in the plane coordinate system;
determining an inscribed rectangle of the plane mask in the plane coordinate system based on the boundary line of the plane mask; and
converting 4 vertices of the inscribed rectangle of the plane mask from the plane coordinate system to the pixel coordinate system.

15. An apparatus of embedding an image in a video, comprising:
a memory; and a processor coupled to the memory, wherein the processor is configured to perform the method of embedding an image in a video according to any of claims 1 to 12 based on instructions stored in the memory.

16. An apparatus of acquiring a plane prediction model, comprising:
a memory; and a processor coupled to the memory, wherein the processor is configured to perform the method of acquiring a plane prediction model according to any of claims 13 to 14 based on instructions stored in the memory.

17. A non-transitory computer-readable storage medium stored a computer program which implements the method of embedding an image in a video according to any of claims 1 to 12 or the method of acquiring a plane prediction model according to any of claims 13 to 14 when executed by a processor.

110, a plane detection frame and a plane mask in a training image are labelled

120, a deep learning model is trained using the training image with the labels of the plane detection frame and the plane mask

130, the trained deep learning model is determined as the plane prediction model

Fig. 1

210, the plane detection frame and the plane mask in the training image as well as 4 key points in the plane mask are labelled

220, the deep learning model is trained using the training images with labels of the plane detection frame and the plane mask as well as labelling information of the 4 key points in the plane mask

230, the trained deep learning model is determined as the plane prediction model

Fig. 2

semantic category

plane detection frame

plane mask

key point

RoI Align

Fig. 3

410 ⟶ 420 ⟶ 430 ⟶ 440 ⟶ 450

460 ⟶ 470 ⟶ 480 ⟶ 490 ⟶ 4100

Fig.4

Fig.5

610, a video frame image of a video is input into a plane prediction model, and a predicted plane mask of the video frame image is acquired

620, the image to be embedded is embedded into the predicted plane mask of the video frame image

Fig. 6

710, a video frame image of a video is input into a plane prediction model, and a predicted plane mask of the video frame image as well as 4 key points in the plane mask are acquired

720, 4 vertices of the image to be embedded are mapped to the 4 key points in the predicted plane mask of the video frame image, and the image to be embedded is embedded into a position region corresponding to the 4 key points in the predicted plane mask of the video frame image

Fig. 7

Fig. 8

Fig. 9

## INTERNATIONAL SEARCH REPORT

| International application No. |
|---|
| **PCT/CN2021/092267** |

**A.    CLASSIFICATION OF SUBJECT MATTER**

H04N 5/265(2006.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI: 掩码, 掩模, 区域, 位置, 嵌入, 替换, 视频, 图像, 广告, 框, 矩形, 边界, 坐标, 关键点, 特征点, 平面, 模型, 训练, 神经网络, 卷积网络; VEN, USTXT, EPTXT, WOTXT: mask, area, position, location, embed, image, advertise, AD, box, coordinate, model, neural network

**C.    DOCUMENTS CONSIDERED TO BE RELEVANT**

| Category* | Citation of document, with indication, where appropriate, of the relevant passages | Relevant to claim No. |
|---|---|---|
| X | CN 110163188 A (TENCENT TECHNOLOGY SHENZHEN CO., LTD.) 23 August 2019 (2019-08-23)<br>    description, paragraphs [0098]-[0107], [0161]-[0164], [0205]-[0208] | 1, 2, 10, 12, 13, 15-17 |
| A | CN 106530312 A (GUANGZHOU AVA ELECTRONIC CO., LTD.) 22 March 2017 (2017-03-22)<br>    entire document | 1-17 |
| A | US 2020234508 A1 (SNAP INC.) 23 July 2020 (2020-07-23)<br>    entire document | 1-17 |
| A | WO 2013087935 A1 (LEMOINE GUILLAUME et al.) 20 June 2013 (2013-06-20)<br>    entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 July 2021** | **02 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/092267**

| Patent document cited in search report | | | Publication date (day/month/year) | Patent family member(s) | | | Publication date (day/month/year) |
|---|---|---|---|---|---|---|---|
| CN | 110163188 | A | 23 August 2019 | None | | | |
| CN | 106530312 | A | 22 March 2017 | CN | 106530312 | B | 12 March 2019 |
| US | 2020234508 | A1 | 23 July 2020 | WO | 2020150692 | A1 | 23 July 2020 |
| | | | | US | 2020234483 | A1 | 23 July 2020 |
| | | | | US | 10839586 | B1 | 17 November 2020 |
| | | | | US | 10776981 | B1 | 15 September 2020 |
| WO | 2013087935 | A1 | 20 June 2013 | EP | 2791778 | A1 | 22 October 2014 |
| | | | | FR | 2984668 | A3 | 21 June 2013 |
| | | | | US | 2014300814 | A1 | 09 October 2014 |
| | | | | FR | 2984668 | B3 | 05 September 2014 |
| | | | | US | 8866970 | B1 | 21 October 2014 |

Form PCT/ISA/210 (patent family annex) (January 2015)

**REFERENCES CITED IN THE DESCRIPTION**

**Patent documents cited in the description**

- CN 202011004707